(19) Europäisches Patentamt
European Patent Office
Office européen des brevets

(11) EP 1 313 368 B1

(12) # EUROPÄISCHE PATENTSCHRIFT

(45) Veröffentlichungstag und Bekanntmachung des Hinweises auf die Patenterteilung:
**26.04.2006 Patentblatt 2006/17**

(21) Anmeldenummer: **01971931.9**

(22) Anmeldetag: **20.08.2001**

(51) Int Cl.:
***A01N 43/40*** *(2006.01)* *A01N 43/40* *(2006.01)*
*A01N 43/80* *(2006.01)*

(86) Internationale Anmeldenummer:
**PCT/EP2001/009581**

(87) Internationale Veröffentlichungsnummer:
**WO 2002/015693 (28.02.2002 Gazette 2002/09)**

(54) **SYNERGISTISCHE BIOZIDZUSAMMENSETZUNG**
SYNERGISTIC BIOCIDAL COMPOSITION
COMPOSITION BIOCIDE SYNERGIQUE

(84) Benannte Vertragsstaaten:
**AT BE CH CY DE DK ES FI FR GB GR IE IT LI LU MC NL PT SE TR**

(30) Priorität: **21.08.2000 DE 10040814**

(43) Veröffentlichungstag der Anmeldung:
**28.05.2003 Patentblatt 2003/22**

(73) Patentinhaber: **THOR GmbH**
**67346 Speyer (DE)**

(72) Erfinder:
- **ANTONI-ZIMMERMANN, Dagmar**
**67346 Speyer (DE)**
- **BAUM, Rüdiger**
**68753 Waghäusel (DE)**
- **WUNDER, Thomas**
**67435 Neustadt/Weinstrasse (DE)**
- **SCHMIDT, Hans-Jürgen**
**67346 Speyer (DE)**

(74) Vertreter: **Diehl & Partner**
**Patentanwälte**
**Augustenstrasse 46**
**80333 München (DE)**

(56) Entgegenhaltungen:
**EP-A- 0 492 811**
**WO-A-00/59305**
**WO-A-01/41570**
**US-A- 5 227 156**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 313 368 B1

## Beschreibung

Die Erfindung betrifft eine Biozidzusammensetzung als Zusatz zu Stoffen, die von schädlichen Mikroorganismen befallen werden können, mit einem Gehalt an einem Pyrithion als biozidem Wirkstoff. Insbesondere bezieht sich die Erfindung auf eine Biozidzusammensetzung, die als algizides und fungizides Mittel zum Konservieren von technischen Gegenständen und Materialien geeignet ist.

Biozide Zusammensetzungen werden in vielen Bereichen eingesetzt, beispielsweise zur Bekämpfung von schädlichen Algen, Pilzen und Bakterien. Zu den zahlreichen bioziden Wirkstoffen gehören z. B. auch Zink- und Natriumpyrithion, wie aus der US 5562995 und der US 5883154 ersichtlich ist. Die erste Druckschrift betrifft unter anderem das Vermeiden einer unerwünschten Verfärbung in einem wässrigen antimikrobiellen Gemisch, das sowohl Eisen- oder Kupferionen als auch Pyrithion als einen antimikrobiellen Wirkstoff enthält. Die Vermeidung einer Verfärbung erfolgt durch Zusatz von Zinkionen. Die zweite Druckschrift bezieht sich unter anderem auf das Verhindern oder Beseitigen einer unerwünschten Verfärbung eines antimikrobiellen Gemisches mit einem Gehalt an einem Harz, an Eisen- oder Kupferionen und an Pyrithion durch Zusatz von Zinkionen.

Auch wurden bereits in der WO 96/39836 Biozidzusammensetzungen beschrieben, die ein Iodpropargylcarbamat als bioziden Wirkstoff enthalten.

Ferner wurde über die biozide Wirkung von 2-n-Octylisothiazolin-3-on berichtet, das gemäß der EP-0676140-A1 beispielsweise im Gemisch mit Methylisothiazolin-3-on eingesetzt wird.

Auch ist 4,5-Dichlor-2-n-octyl-4-isothiazolin-3-on als Fungizid im Handel erhältlich, beispielsweise unter der Bezeichnung "Rozone® 2000" von Rohm and Haas Company oder unter der Bezeichnung "ACTICIDE®" DT von Thor GmbH.

Aus der Japanischen Patentanmeldung 1992/353836 ist eine mikrobizide Zusammensetzung bekannt, die Zink-2-pyridionthiol-1-oxid, also Zinkpyrithion, und beispielsweise 3-Iod-2-propinylbutylcarbamat enthält.

Ferner ist in der Japanischen Patentanmeldung 1993/99195 ein Textilmaterial beschrieben, das mit einem Mittel zur Bekämpfung des Pilzwachstums auf den Textilfasern ausgerüstet ist. Dieses Mittel enthält den 3-Iod-2-propinylester der N-n-Butylcarbaminsäure, also 3-Iod-2-propinyl-N-butylcarbamat, und beispielsweise Bis (2-pyridylthio-1-oxidono)-zink, also Zinkpyrithion.

Auch sind in der US 5464622 antimikrobielle Zusammensetzungen angegeben, die das Zinksalz des 2-Mercaptopyridin-N-oxids, also Zinkpyrithion, und Iodpropargylbutylcarbamat enthalten.

Schließlich betrifft die WO 98/21962 algizide. Zusammensetzungen, die ein Gemisch aus Zinkpyrithion und einer Halogenpropinylverbindung, z.B. 3-Iod-2-propinylbutylcarbamat, enthält.

Im vorgenannten Stand der Technik gibt es keinen Hinweis auf Zusammensetzungen, die neben Zinkpyrithion noch ein Octylisothiazolin-3-on aufweisen.

Die bekannten Biozidzusammensetzungen, welche einen der vorgenannten bioziden Wirkstoffe enthalten, sind für bestimmte Anwendungszwecke noch nicht befriedigend. Dies gilt insbesondere bei ihrem Einsatz als Konservierungsmittel für die biozide Ausrüstung von Gegenständen oder Beschichtungen, deren Oberflächen erfahrungsgemäß häufig von Algen oder Pilzen befallen werden. Ein Algen- oder Pilzbefall macht Oberflächen nicht nur optisch unansehnlich, sondern kann auch zur Materialschädigung und zur Verkürzung der Gebrauchsdauer der, entsprechenden Gegenstände und Oberflächen führen. Der mikrobielle Befall von Gegenständen oder von darauf aufgebrachten Beschichtungen tritt vor allem an Stellen mit hoher Feuchtigkeit auf, sowohl im Innenbereich, z. B. in Gebäuden der Lebensmittelindustrie, von Molkereien oder Brauereien, als auch im Außenbereich, vor allem an Gebäuden, die ungünstigen Witterungsbedingungen ausgesetzt sind, beispielsweise an Gebäudeseiten mit fehlender Sonneneinstrahlung. Insbesondere sind Beschichtungen, die einen der vorgenannten bioziden Wirkstoffe enthalten, gegen Besiedelung durch beispielsweise Alternaria-Arten oder andere Pilze aus der Gruppe der sogenannten "Schwärzepilze" zu wenig beständig. Einerseits führt der mikrobielle Bewuchs zu einer optischen Beeinträchtigung und einer damit einhergehenden Verfärbung. Andererseits neigen verschiedene biozide Wirkstoffe unter der Einwirkung von UV-Strahlung zu Verfärbungen.

Schließlich ist es erwünscht, mit den Wirkstoffen einerseits eine möglichst starke biozide Wirkung zu erzielen und andererseits dafür nur relativ kleine Mengen der Wirkstoffe einsetzen zu müssen.

Der Erfindung liegt daher die Aufgabe zugrunde, eine Biozidzusammensetzung anzugeben, die dadurch verbessert ist, daß ihre Komponenten in den vorgenannten technischen Materialien und Gegenständen, insbesondere in Beschichtungssystemen, wie Anstrichfarben, Lacken und Putzen, synergistisch zusammenwirken und deshalb in geringeren Konzentrationen als im Falle der Einzelkomponenten zum Schutz gegen Befall und Zerstörung durch Mikroorganismen verwendet werden können. Vorzugsweise soll die Biozidzusammensetzung gegen Bakterien, Pilze und Algen wirksam sein, insbesondere gegen Schimmelpilze, Hefen, holzzerstörende und holzverfärbende Pilze sowie Algen, ferner im Antifoulingbereich gegen relevante marine Organismen, wie Balus, Ascidia, Serpula, Mytilus, Spirorbis, Bugula und Hydrazoa. Dabei soll die Biozidzusammensetzung eine Wirksamkeit gegenüber Alternaria-Species und anderen Pilzen aus der Gruppe der sogenannten "Schwärzepilze" aufweisen und auch gegen eine Verfärbung durch Einwirkung von UV-Licht und Wärme möglichst stabil sein.

Diese Aufgabe löst die Erfindung durch eine Biozidzusammensetzung mit einem Gehalt an einem Pyrithion (2-Pyridinthiol-1-oxid) als biozidem Wirkstoff. Die Zusammensetzung ist dadurch gekennzeichnet, daß sie als weiteren bioziden Wirkstoff ein 2-Alkylisothiazolin-3-on sowie ein Iodalkylcarbamat enthält.
Die erfindungsgemäße Biozidzusammensetzung ist insbesondere als algizides und fungizides Mittel zur Konservierung von mikrobiell anfälligen technischen Materialien geeignet. Solche Materialien, die durch diese Biozidzusammensetzung vor mikrobieller Veränderung oder Zerstörung geschützt werden sollen, sind z. B. Beschichtungssysteme, wie Farben, Lacke, Putze oder Antifoulinganstriche, sowie Kunststoffgegenstände, Kühlschmiermittel, Wärmeübertragungsflüssigkeiten, Klebestoffe, Leime, Papiere, Kartone, Leder, Textilien und Holz.
Beispiele für Mikroorganismen, die technische Materialien und Gegenstände der vorgenannten Art besiedeln, sind Vertreter der folgenden Gattungen:

Alternaria, wie Alternaria alternata,
Aspergillus, wie Aspergillus niger,
Aureobasidium, wie Aureobasidium pullulans,
Chaetomium, wie Chaetomium globosum,
Coniophora, wie Coniophora puteana,
Cladosporium, wie Cladosporium cladosporoides,
Candida, wie Candida albicans,
Lentinus, wie Lentinus tigrinus,
Penicillium, wie Penicillium funiculosum,
Rhodotorula, wie Rhodotorula rubra,
Sclerophoma, wie Sclerophoma pityophila,
Trichoderma, wie Trichoderma viride,
Ulocladium, wie Ulocladium atrum,
Escherichia, wie Escherichia coli,
Pseudomonas, wie Pseudomonas aeruginosa,
Staphylococcus, wie Staphylococcus aureus.

Die erfindungsgemäße Biozidzusammensetzung, die sich insbesondere als Konservierungsmittel für Beschichtungssysteme eignet, weist folgende positive Eigenschaften auf:

a) gute algizide Wirkung;

b) gute fungizide Wirkung;

c) gute Wirksamkeit gegen Alternaria-Spezies und andere vergleichsweise schwer zu inaktivierende Problemkeime auf dem Gebiet der Konservierung, insbesondere der Filmkonservierung und des Materialschutzes, zum Beispiel bei Beschichtungen in Form von Anstrichfarben, Antifoulingfarben, Lacken und Putzen, und für den Schutz von Holz, Leder und Kunststoffen;

d) gute Beständigkeit auch bei hoher Auswaschbelastung sowie Belastung durch UV-Licht, Wärme, extreme Wetter- und Klimabedingungen sowie wetterwechselbedingungen;

e) biozide Langzeitwirkung trotz geringer Konzentration der eingesetzten Biozidzusammensetzung;

f) geringe Toxizität gegenüber Menschen und Säugetieren;

g) sehr niedriger Dampfdruck der bioziden Wirkstoffe;

h) günstiges Verhältnis von Preis und Leistung.

Die erfindungsgemäße Biozidzusammensetzung zeichnet sich dadurch aus, daß darin das Gemisch aus einem Pyrithion, einem Iodalkylcarbamat und einem 2-Alkylisothiazolin-3-on zu einer synergistischen bioziden Wirkung führt. Dies ermöglicht es beispielsweise, daß dann, wenn eine gute algizide Wirkung erwünscht ist, auf ein zusätzliches Algizid verzichtet werden kann.
Erfindungsgemäß liegt in der Biozidzusammensetzung das Pyrithion vorzugsweise in Form von Zink- oder Natriumpyrithion vor. Es können aber auch Kupfer- und Eisenpyrithion eingesetzt werden. Diese beiden letztgenannten Verbindungen weisen eine starke Eigenfärbung auf und eignen sich deshalb nur für spezielle Anwendungen, z. B. für eine Antifoulinganwendung.

Auch ist es günstig, wenn das Pyrithion in einer Konzentration von 0,1 bis 99,9 Gew. % und das 2-Alkylisothiazolin-3-on, auch in Form eines Gemisches aus zwei oder mehr 2-Alkylisothiazolin-3-onen, in einer Konzentration von 0,1 bis 99,9 Gew.%, jeweils bezogen auf die gesamte Biozidzusammensetzung, in der Zusammensetzung vorhanden sind.

In dem 2-Alkylisothiazolin-3-on bedeutet der Alkylrest einen n-Alkyl-, i-Alkyl- oder c-Alkylrest. Der Alkylrest enthält vorzugsweise 1 bis 10, insbesondere 1 bis 8, Kohlenstoffatome. Besonders bevorzugt sind das 2-n-Octylisothiazolin-3-on und das 4,5-Dichlor-2-n-octylisothiazolin-3-on.

Die erfindungsgemäße Biozidzusammensetzung enthält das Pyrithion und das 2-Alkylisothiazolin-3-on vorzugsweise im Gewichtsverhältnis von 1:1000 bis 1000:1, insbesondere von 1:99 bis 99:1, besonders bevorzugt von 1:10 bis 10:1, ganz besonders bevorzugt von 1:3 bis 3:1.

Es hat sich gezeigt, daß der Synergismus in der Biozidwirkung der erfindungsgemäßen Zusammensetzung mit einem Pyrithion und einem 2-Alkylisothiazolin-3-on als Wirkstoffe noch gesteigert werden kann, wenn die Zusammensetzung als ergänzenden bioziden Wirkstoff auch noch ein Iodalkylcarbamat, insbesondere 3-Iod-2-propinyl-N-butylcarbamat, enthält.

Es ist zweckmäßig, die bioziden Wirkstoffe der erfindungsgemäßen Zusammensetzung in Kombination mit einem polaren oder unpolaren flüssigen Medium in den mikrobiell anfälligen Systemen einzusetzen. Dabei kann dieses Medium beispielsweise in der Biozidzusammensetzung und/oder in dem zu konservierenden System vorgegeben sein.

Bevorzugte polare flüssige Medien sind Alkohole, Ester, Glykole, Glykolether, Glykolester und 2,2,4-Trimethyl-1,3-pentandiolmonoisobutyrat (erhältlich unter der Handelsbezeichnung "Texanol" von Eastman Chemical Company).

Bevorzugte unpolare flüssige Medien sind Aromaten, wie Alkylbenzole, z. B. Xylol und Toluol, Paraffine, unpolare Ester, wie Phthalate und Fettsäureester, epoxidierte Fettsäuren und deren Derivate sowie Siliconöle.

Die erfindungsgemäße Biozidzusammensetzung weist vorzugsweise einen pH-Wert im Bereich von 4 bis 10, insbesondere im Bereich von 6 bis 8, auf.

Die vorgenannten bioziden Wirkstoffe, nämlich das Pyrithion, das z. B. in Form von Zink-, Natrium-, Kupfer- und/oder Eisenpyrithion vorliegt, und das Iodalkylcarbamat, z.B. in Form von 3-Iod-2-propinyl-N-butylcarbamat, 3-Iod-2-propinyl-N-hexylcarbamat, 3-Iod-2-propinyl-N-cyclohexylcarbamat und/ oder 3-Iod-2-propinyl-N-phenylcarbamat, sowie das 2-n-Octylisothiazolin-3-on und/oder das 4,5-Dichlor-2-n-octylisothiazolin-3-on sind bekannte Stoffe und können nach Verfahren gemäß dem Stand der Technik hergestellt werden.

Die erfindungsgemäße Biozidzusammensetzung kann zusätzlich einen oder mehrere andere biozide Wirkstoffe enthalten, die in Abhängigkeit vom speziellen zu konservierenden System ausgewählt werden. Beispiele für solche anderen bioziden Wirkstoffe sind nachfolgend angegeben:

Triazole, wie Amitrol, Azocyclotin, BAS 480F, Bitertanol, Difenoconazol, Fenbuconazol, Fenchlorazol, Fenethanil, Fluquinconazol, Flusilazol, Flutriafol, Imibenconazol, Isozofos, Myclobutanil, Metconazol, Epoxyconazol, Paclobutrazol, Penconazol, Propioconazol, (±)-cis-1-(4-Chlorphenyl)-2-(1H-1,2,4-triazol-1-yl)-cycloheptanol, Tetraconazol, Triadimefon, Triadimenol, Triapenthenol, Triflumizol, Triconazol und Uniconazol sowie die Metallsalze und Säureaddukte dieser Triazole;

Imidazole, wie Imazalil, Pefurazoat, Prochloraz, Triflumizol und 2-(1-t-Butyl)-1-(2-chlorphenyl)-3-(1,2,4-triazol-1-yl)-propan-2-ol sowie die Metallsalze und Säureaddukte dieser Imidazole;

Thiazolcarboxanilide, wie 2',6'-Dibrom-2-methyl-4-trifluormethoxy-4'-trifluormethyl-1,3-thiazol-5-carboxanilide, und die Metallsalze und Säureaddukte dieser Thiazolcarboxanilide;

Methyl-(E)-2-{2-[6-(2-cyanophenoxy)-pyrimidin-4-yloxy]-phenyl}-3-methoxyacrylat, Methyl-(E)-2-{2-[6-(2-thioamidophenoxy)-pyrimidin-4-yloxy]-phenyl}-3-methoxyacrylat, Methyl-(E)-2-{2-[6-(2-fluorphenoxy)-pyrimidin-4-yloxy]-phenyl}-3-methoxyacrylat, Methyl-(E)-2-{2-[6-(2,6-difluorphenoxy-pyrimidin-4-yloxy]-phenyl}-3-methoxyacrylat, Methyl-(E)-2-{2-[3-(pyrimidin-2-yloxy)-phenoxy]-phenyl}-3-methoxyacrylat, Methyl-(E)-2-{2-[3-(5-methylpyrimidin-2-yloxy}-phenoxy]-phenyl}-3-methoxyacrylat, Methyl-(E)-2-{2-[3-(phenylsulfonyloxy)-phenoxy-]-phenyl}-3-methoxyacrylat, Methyl-(E)-2-{2-[3-(4-nitrophenoxy)-phenoxy]-phenyl}-3-methoxyacrylat, Methyl-(E)-2-(2-phenoxyphenyl)-3-methoxyacrylat, Methyl-(E)-2-[2-(3,5-dimethylbenzoyl)-pyrrol-1-yl]-3-methoxyacrylat, Methyl-(E)-2-[2-(3-methoxyphenoxy)-phenyl]-3-methoxyacrylat, Methyl-(E)-2-[2-(2-phenylethen-1-yl)-phenyl]-3-methoxyacrylat, Methyl-(E)-2-[2-(3,5-dichlorphenoxy)-pyridin-3-yl]-3-methoxyacrylat, Methyl-(E)-2-{2-[3-(1,1,2,2-tetrafluorethoxy)-phenoxy]-phenyl}-3-methoxyacrylat, Methyl-(E)-2-{2- [3-α-hydroxybenzyl)-phenoxy]-phenyl}-3-methoxyacrylat, Methyl-(E)-2-[2-(4-phenoxypyridin-2-yloxy)-phenyl]-3-methoxyacrylat, Methyl-(E)-2-[2-(3-n-propyloxyphenoxy)-phenyl]-3-methoxyacrylat, Methyl-(E)-2- [2-(3-isopropyloxyphenoxy)-phenyl]-3-methoxyacrylat, Methyl-(E)-{2-(3-(2-fluorphenoxy)-phenoxy]-phenyl}-3-methoxyacrylat, Methyl-(E)-2-[2-(3-ethoxyphenoxy)-phenyl]-3-methoxyacrylat, Methyl-(E)-2-[2-(4-t-butylpyridin-2-yloxy)-phenyl]-3-methoxyacrylat, Methyl-(E)-2-{2-[3-(3-cyanophenoxy)-phenoxy]-phenyl}-3-methoxyacrylat, Methyl-(E)-2-[2-(3-methyl-pyridin-2-yloxymethyl)-phenyl]-3-methoxyacrylat, Methyl-(E)-2-{2-[6-(2-methylphenoxy)-pyrimidin-4-yloxy]-phenyl}-3-methoxyacrylat, Methyl-(E)-2-[2-(5-brompyridin-2-yloxymethyl)-phenyl]-3-methoxyacrylat, Methyl-(E)-2-{2-[3-(3-iodpyridin-2-yloxy)-phenoxy]-phenyl}-3-methoxyacrylat, Methyl-(E)-2-{2-[6-(2-chlorpyridin-3-yloxy)-pyrimidin-4-yloxy]-phenyl}-3-methoxyacrylat, (E), (E)-Methyl-2-[2-(5,6-dimethylpyrazin-2-ylmethyloximinomethyl)-phenyl]-3-methoxyacrylat, (E)-Methyl-2-{2-[6-(6-methylpyridin-2-yloxy)-pyrimidin-4-yloxy]-phenyl}-3-methoxyacrylat, (E), (E)-Methyl-2-{2-[(3-methoxyphenyl)-methyloximinomethyl]-phenyl}-3-methoxyacrylat, (E)-Methyl-2-{2-[6-(2-azidophenoxy)-pyrimidin-4-yloxy]-phenyl}-3-methoxyacrylat, (E),(E)-Methyl-2-{2-[6-(phenylpyrimidin-4-yl)-methyloximinomethyl]-phenyl}-3-methoxyacrylat, (E), (E)-Methyl-2-{2-[(4-chlorphenyl)-methyloximinomethyl]-phenyl}-3-methoxyacrylat, (E)-Methyl-2-{2-[6-(2-n-propylphenoxy)-1,3,5-triazin-4-yloxy]-phenyl}-3-methoxyacrylat, (E), (E)-Methyl-2-{2-[(3-nitrophenyl)-methyloximinomethyl]-phenyl}-3-methoxyacrylat;

Succinatdehydrogenaseinhibitoren, wie Fenfuram, Furcarbanil, Cyclafluramid, Furmecyclox, Seedvax, Metsulfovax, Pyrocarbolid, Oxycarboxin, Shirlan, Mebenil (Mepronil), Benodanil und Flutolanil (Moncut);

Naphthalinderivate, wie Terbinafin, Naftifin, Butenafin, 3-Chlor-7-(2-aza-2,7,7-trimethyloct-3-en-5-in);

Sulfenamide, wie Dichlofluanid, Tolyfluanid, Folpet und Fluorfolpet;

Captan, Captofol;

Benzimidazole, wie Carbendazim, Benomyl, Furathiocarb, Fuberidazol, Thiophonatmethyl und Thiabendazol sowie Salze hiervon;

Morpholinderivate, wie Tridemorph, Fenpropimorph, Falimorph, Dimethomorph, Dodemorph, Aldimorph und Fenpropidin sowie Salze hiervon mit Arylsulfonsäuren, z. B. mit p-Toluolsulfonsäure und p-Dodecylphenylsulfonsäure;

Dithiocarbamate, Cufraneb, Ferbam, Mancopper, Mancozeb, Maneb, Metam, Metiram, Thiramzeneb, Ziram;

Benzothiazole, wie 2-Mercaptobenzothiazole;

Benzamide, wie 2,6-Dichlor-N-(4-trifluormethylbenzyl)-benzamide;

Borverbindungen, wie Borsäure, Borsäureester und Borax;

Formaldehyd und Formaldehyddonorverbindungen, wie Benzylalkoholmono-(poly)-hemiformal, Oxazolidine, Hexahydro-S-triazine, N-Methylolchloracetamid, Paraformadehyd, Nitropyrin, Oxolinsäure, Tecloftalam;

Biguanide, wie Polyhexamethylenbiguanid;

Tris-N-(cyclohexyldiazeniumdioxy)-aluminum, N-(Cyclohexyldiazeniumdioxy)-tributylzinn und Kaliumsalze hiervon, Bis-N-(cyclohexyldiazeniumdioxy)-kupfer;

N-Methylisothiazolin-3-on, 5-Chlor-N-methylisothiazolin-3-on, 4,5-Trimethylenisothiazolinone, 1,2-Benzisothiazolinone, N-Methylolchloracetamid;

Aldehyde, wie Zimtaldehyd, Glutaraldehyd und β-Bromzimtaldehyd;

Thiocyanate, wie Thiocyanatomethylthiobenzothiazol und Methylenbisthiocyanat;

quartäre Ammoniumverbindungen, wie Benzyldimethyltetradecylammoniumchlorid, Benzyldimethyldodecylammoniumchlorid und Didecyldimethylammoniumchlorid;

Iodderivative, wie Diiodmethyl-p-tolylsulfon, 3-Iod-2-propinylalkohol, 4-Chlorphenyl-3-iodpropargylformal, 3-Brom-2,3-diiod-2-propenylethylcarbamat, 2,3,3-Triiodallylalkohol, 3-Brom-2,3-diiod-2-propenylalkohol;

Phenolderivative, wie Tribromphenol, Tetrachlorphenol, 3-Methyl-4-chlorphenol, 3,5-Dimethyl-4-chlorphenol, Phenoxyethanol, Dichlorphen, o-Phenylphenol, m-Phenylphenol, p-Phenylphenol und 2-Benzyl-4-chlorphenol sowie die Alkali- und Erdalkalimetallsalze dieser Phenolderivate;

Microbizide mit einem aktivierten Halogenatom, wie Chloracetamide, Bronopol und Bronidox;

Tectamere, wie 2-Brom-2-nitro-1,3-propandiol, 2-Brom-4'-hydroxyacetophenon, 2,2-Dibrom-3-nitrilpropionamid, 1,2-Dibrom-2,4-dicyanobutan und β-Brom-β-nitrostyrol;

Tetrachlor-4-methylsulfonylpyridin, Pyrimethanol, Mepanipyrim, Dipyrithion;

Metallseifen, wie Zinn-, Kupfer- und Zinknaphthenat, -octoat, -2-ethylhexanoat, -oleat, -phosphat und -benzoat;

Metallsalze, wie Kupferhydroxycarbonat, Natriumdichromat, Kaliumdichromat, Kaliumchromat, Kupfersulfat, Kupferchlorid, Kupferborat, Zinkfluorsilicat, Kupferfluorsilicat;

Oxide, wie Tributylzinnoxid, $Cu_2O$, CuO, ZnO;

Dialkyldithiocarbamate, wie Natrium- und Zinksalze von Dialkyldithiocarbamaten, Tetramethylthiuramdisulfid und Kalium-N-methyldithiocarbamat;

Nitrile, wie 2,4,5,6-Tetrachlorisophthalodinitril, Dinatriumcyanodithioimidocarbamat;

Chinoline, wie 8-Hydroxychinoline und seine Kupfersalze;

Mucochlorsäure, 5-Hyroxy-2-(5H)-furanon;

4,5-Dichlordithiazolinon, 4,5-Benzodithiazolinon, 4,5-Trimethylendithiazolinon;

4,5-Dichlor-(3H)-1,2-dithiol-3-on, 3,5-Dimethyltetrahydro-1,3,5-thiadiazin-2-thion, N-(2-p-Chlorbenzoylethyl)-hexaminiumchlorid, Kalium-N-hydroxymethyl-N'methyldithiocarbamat;

2-Oxo-2-(4-hydroxyphenyl)-acethydroximinsäurechlorid;

Phenyl-(2-chlorcyanovinyl)-sulfon, Phenyl-1,2-dichlor-2-cyanovinylsulfon;

silber-, zink- oder kupferhaltige Zeolithe, allein oder eingeschlossen in polymeren aktiven Bestandteilen;

Algicide, wie Kupfersulfat, Dichlorophen, Endothal, Fentinacetat und Chinoclamin;

Herbizide, wie Acetochlor, Acifluorfen, Aclonifen, Acrolein, Alachlor, Alloxydim, Ametryn, Amidosulfuron, Amitrol, Ammoniumsulfat, Anilofos, Asulam, Atrazin, Aziprotryn, Benazolin, Benfluralin, Benfuresat, Bensulfuron, Bensulid, Bentazon, Chloridazon, Chlorimuron, Chlormethoxyfen, Chlornitrofen, Chloressigsäure, Chlorpikrin, Chlortoluron, Chlorxuron, Chlorprepham, Chlorsulfuron, Chlorthal, Chlorthiamid, Cinmethylin, Cinofulfuron, Clethodim, Clomazon, Clomeprop, Clopyralid, Cyanamid, Cyanazin, Cycloat, Cycloxydim, Benzofencap, Benzthiazuron, Bifenox, Bilanafos, Borax, Bromacil, Brombutid, Bromfenoxim, Bromxynil, butachlor, Butamifos, Butanachlor, Butralin, Butylat, Carbetamid, CGA 184927, Chloramben, Chlorbromuron, Chlorbufam, Chlorflurenol, Difenoxuron, Difenzoquat, Diflufenican, Dimefuron, Dimepiperat, Dimethachlor, Dimethametryn, Dimethipin, Dimethylarsinsäure, Dinitramin, Dinosebacetat, Dinoseb, Dinoterb, Diphenamid, Dipropetryn, Diquat, Dithiopyr, Diuron, DNOC, PPX-A788, 2,4-D, Daimuron, Dalapon, Dazomet, 2,4-DB, Desmedipham, Desmetryn, Dicamba, Dichlobenil, Dichlorprop, Dichlorprop-P, Diclofop, Diethatyl, Flamprop-M, Flazasulfuron, Fluazifop, Fluazifop-P, Fluchloralin, Flumeturon, Fluorglycofen, Fluornitrofen, Flupropanat, Flurenol, Fluridon, Flurochloridon, Fluroxypyr, Fomosafen, Fusamin, Furyloxyfen, Glufosinat, Glyphosat, Haloxyfop, Hexazinon, Imazamethabenz, Imazapyr; Imazaquin, Imazethapyr, Ioxynil, Isopropalin, Isoproturon, Isouron, Isoxaben, Isoxapyrifop, Lactofen, Lenacil, Linuron, LS830556, MCPA, Pebulat, Pendimethalin, Pentachlorphenol, Pentanochlor, Erdölfraktionen, Phenmedipham, Picloram, Piperophos, Pretilachlor, Primisulfuron, Prodiamin, Proglinazin, Prometon, Prometryn, Propachlor, Propanil, Propaquizafop, Propazin, Propham, Propyzamid, Prosulfocarb, Pyrazolynat, Pyrazosulfuron, Pyrazoxyfen, Pyributicarb, Pyrridat, Quinclorac, Quinmerac, Quinoclamin, Quizalofop, Quizalofop-P, S-23121, DPX-E96361, DSMA, Eglinazin, Endothal, Epsorcarb, EPTC, Ethalfluralin, Ethidimuron, Ethofumesat, Fenoxaprop, Fenoxaprop-P, Fenuron, Flamprop, Irgarol 1051, MCPA-thioethyl, MCPB, Mecoprop, Mecoprop-P, Mefenacet, Mefluidid, Metam, Metamitron, Metazachlor, Methabenzthiazuron, Methazol, Methoprotryn, Methyldymron, Methylisothiocyanat, Metobromuron, Metolachlor, Metoxuron, Metribzin, Metsulfuron, Molinat, Monoalid, Monolinuron, MSMA, Naproanilid, Napropamid, Naptalam, Neburon, Nicosulfuron, Nipyraclofen, Norflurazon, Orbencarb, Oryzalin, Oxadiazon, Oxyfluorfen, Paraquat, Prometryn, Simetryn, SMY 1500, Natriumchlorat, Sulfometuron, Teeröle, TCA, Tebutam, Tebuthiuron, Terbacil, Terbumeton, Terbuthylazin, Terbutryn, Thiazafluron, Thifensulfuron, Thiobencarb, Thiocarbazil, Tioclorim, Tralkoxydim, Triallat, Triasulfuron, Tribenzuron, Triclopyr, Tridiphan, Trietazin, Trifluralin, UB1-C4874, Vernolat.

Die erfindungsgemäße Biozidzusammensetzung kann weitere übliche Bestandteile enthalten, die dem Fachmann auf dem Gebiet der Biozide als Zusatzstoffe bekannt sind. Es sind dies z. B. Verdickungsmittel, Entschäumer, Stoffe zur Einstellung des pH-Werts, Duftstoffe, Dispergierhilfsmittel und Stabilisatoren, wie Puffer, Zinksalze, Zinkoxid und Komplexbildner.

Bei der praktischen Anwendung kann die Biozidzusammensetzung entweder als fertiges Gemisch oder durch getrennte Zugabe der Biozide und der übrigen Komponenten der Zusammensetzung in das zu konservierende mikrobiell anfällige System eingebracht werden. Im allgemeinen liegt die Gesamtkonzentration der Biozide in dem zu konservierenden mikrobiell anfälligen System, wenn es sich dabei z. B. um Farben, Putze, Kunststoffe und Leder handelt, bei 0,01 bis 10 %. Werden die Biozide als Antifoulingwirkstoffe benutzt, beträgt ihre Gesamtkonzentration in dem zu konservierenden System 0,1 bis 50 %. Im Fall des Einsatzes der Biozide für den Holzschutz werden sie normalerweise mit einer Gesamtkonzentration von 0,1 bis 20 % benutzt. Diese Konzentrationsangaben beziehen sich jeweils auf das gesamte Gemisch aus dem zu konservierenden System und der Biozidzusammensetzung.

Die Beispiele erläutern die Erfindung.

Beispiel 1

Mit diesem Beispiel wird der Synergismus von Kombinationen aus Zinkpyrithion (ZnPy), -3-Iod-2-propinyl-N-butylcarbamat (IPBC) und 2-n-Octylisothiazolin-3-on (OIT) in der erfindungsgemäßen Biozidzusammensetzung aufgezeigt.

Dazu wurden wäßrige Gemische mit unterschiedlichen Konzentrationen an einerseits einem Gemisch aus ZnPy und OIT (Gewichtsverhältnis 80:20) sowie andererseits 3-Iod-2-propinyl-N-butylcarbamat (IPBC) hergestellt, und es wurde die Wirkung dieser Gemische auf Peilicillium funiculosum DSM 12637 geprüft.

Die wäßrigen Gemische enthielten außer der Biozidkomponente und Wasser noch ein Nährmedium, nämlich eine Sabouraud-Maltose-Bouillon (Handelsprodukt Merck Nr. 10393). Die Zelldichte betrug $10^6$ Keime/ml. Die Inkubationszeit war 96 h bei 25 °C. Jede Probe wurde mit 120 U/min auf einem Inkubationsschüttler bebrütet.

In der nachfolgenden Tabelle I sind die verwendeten Konzentrationen einerseits des Gemisches aus ZnPy und OIT sowie andererseits von IPBC angegeben. Ferner ist daraus ersichtlich, ob jeweils ein Wachstum des Mikroorganismus stattfand (Symbol "+") oder nicht (Symbol "-").

Die Tabelle I zeigt somit auch die minimalen Hemmkonzentrationen (MHK). Hiernach ergibt sich beim Einsatz nur des Gemisches aus ZnPy und OIT (Gewichtsverhältnis 80:20) ein MHK-Wert von 0,75 ppm und beim Einsatz von IPBC allein ein MHK-Wert von 2 ppm. Dagegen sind die MHK-Werte von Gemischen aus einerseits ZnPy + OIT und andererseits IPBC deutlich niedriger, das heißt, diese Gemische wirken in ihrer Kombination synergistisch.

Tabelle I MHK-Werte von ZnPy/OIT (80:20) + IPBC bezüglich Penicillium funiculosum DSM 12637 bei einer Inkubationszeit von 96 h/25 °C

| | Konzentration IPBC (ppm) | | | | | | | | | | |
|---|---|---|---|---|---|---|---|---|---|---|---|
| Konzentration ZnPy/OIT (80:20) (ppm) | 3 | 2 | 1 | 0,75 | 0,5 | 0,4 | 0,3 | 0,2 | 0,1 | 0,05 | 0 |
| 5 | - | - | - | - | - | - | - | - | - | - | - |
| 3,0 | - | - | - | - | - | - | - | - | - | - | - |
| 2 | - | - | - | - | - | - | - | - | - | - | - |
| 1 | - | - | - | - | - | - | - | - | - | - | - |
| 0,75 | - | - | - | - | - | - | - | - | - | - | - |
| 0,5 | - | - | - | - | - | - | - | - | - | - | - |
| 0,4 | - | - | - | - | - | - | - | - | - | + | + |
| 0,3 | - | - | - | - | + | + | + | + | + | + | + |
| 0,2 | - | - | - | - | + | + | + | + | + | + | + |
| 0,1 | - | - | - | - | + | + | + | + | + | + | + |

Tabelle fortgesetzt

| Konzentration ZnPy/OIT (80:20) (ppm) | Konzentration IPBC (ppm) 3 | 2 | 1 | 0,75 | 0,5 | 0,4 | 0,3 | 0,2 | 0,1 | 0,05 | 0 |
|---|---|---|---|---|---|---|---|---|---|---|---|
| 0,05 | - | - | - | + | + | + | + | + | + | + | + |
| 0 | - | - | + | + | + | + | + | + | + | + | + |

Der auftretende Synergismus wird mittels der in der Tabelle II berechneten Werte des Synergieindex zahlenmäßig dargestellt. Die Berechnung des Synergieindex nach der Methode von F. C. Kull et al., Applied Microbiology, Bd. 9 (1961), S. 538. Hier wird der Synergieindex mit der folgenden Formel berechnet:

$$\text{Synergieindex SI} = Q_a/Q_A + Q_b/Q_B.$$

Bei der Anwendung dieser Formel auf das hier geprüfte Biozidsystem haben die Größen in der Formel folgende Bedeutung:

$Q_a$ = Konzentration von ZnPy im Biozidgemisch aus ZnPy und IPBC

$Q_A$ = Konzentration von ZnPy als einziges Biozid

$Q_b$ = Konzentration von IPBC im Biozidgemisch aus ZnPy und IPBC

$Q_B$ = Konzentration von IPBC als einziges Biozid

Wenn der Synergieindex einen Wert von über 1 aufweist, bedeutet dies, daß ein Antagonismus vorliegt. Wenn der Synergieindex den Wert 1 annimmt, bedeutet dies, daß eine Addition der Wirkung der beiden Biozide gegeben ist. Wenn der Synergieindex einen Wert von unter 1 annimmt, bedeutet dies, daß ein Synergismus der beiden Biozide besteht.

Bei gleichzeitigem Einsatz von einerseits ZnPy/OIT (Gewichtsverhältnis 80:20) und andererseits IPBC trat ein Synergismus ein. Die Berechnung des Synergieindex ergibt sich aus der Tabelle II. Hiernach lag bei Penicillium funiculosum DSM 12637 der niedrigste Synergieindex (0,58) bei einem Gemisch aus 11,8 Gew.% ZnPy/OIT (80:20) und 88,2 Gew.% IPBC.

Tabelle II Berechnung des Synergieindex von ZnPy/OIT (80:20)+ IPBC bezüglich Penicillium funiculosum DSM 12637 bei einer Inkubationszeit von 96 h/25 °C

| MHK bei | | | Konzentration | | $Q_a/Q_A$ | $Q_b/Q_B$ | Synergie-index |
|---|---|---|---|---|---|---|---|
| ZnPy/ IPBC-OIT-Konzentration (80:20) $Q_a$ (ppm) | IPBC-konzentration $Q_b$ ppm) | Gesamt-konzentration ZnPy/OIT + IPBC $Q_a + Q_b$ (ppm) | ZnPy/OIT (80:20) (Gew-%) | IPBC (Gew.%) | | | $Q_a/Q_A + Q_b/Q_B$ |
| 0 | 2 | 2 | 0,0 | 100,0 | 0,00 | 1,00 | 1,00 |
| 0,05 | 1 | 1,5 | 4,8 | 95,2 | 0,10 | 0,50 | 0,60 |
| 0,1 | 0,75 | 0,85 | 11,8 | 88,2 | 0,20 | 0,38 | 0,58 |
| 0,2 | 0,75 | 0,95 | 21,1 | 78,9 | 0,40 | 0,38 | 0,78 |
| 0,4 | 0,1 | 0,5 | 80,0 | 20,0 | 0,80 | 0,05 | 0,85 |
| 0,5 | 0 | 0,5 | 100,0 | 0,0 | 1,00 | 0,00 | 1,00 |

Beispiel 2

Ähnlich wie im Beispiel 1 wurde der Synergismus eines Gemisches aus ZnPy, IPBC und 4,5-Dichlor-2-n-octyl-4-isothiazolin-3-on (DCOIT) gegenüber dem Mikroorganismus Penicillium funiculosum DSM 12637 aufgezeigt. Das Gewichtsverhältnis von ZnPy und DCOIT betrug in jedem Fall 80:20.

Die Versuchsansätze enthielten wieder eine Sabouraud-Maltose-Bouillon als Nährmedium. Die Zelldichte betrug $10^6$ Keime/ml. Die Inkubationszeit war 96 h bei 25 °C. Jede Probe wurde mit 120 U/min auf einem Inkubationsschüttler bebrütet.

Aus der nachfolgenden Tabelle III sind die MHK-Werte der geprüften Biozidzusammensetzungen ersichtlich. Der MHK-Wert beim Einsatz eines Gemisches aus ZnPy und DCOIT (Gewichtsverhältnis 80:20) allein betrug 0,50 ppm und beim Einsatz von IPBC allein 2 ppm.

Tabelle III MHK-Werte von ZnPy/DCOIT (80:20) + IPBC bezüglich Penicillium funiculosum DSM 12637 bei einer Inkubationszeit von 96 h/25 °C

| | Konzentration IPBC (ppm) | | | | | | | | | | |
|---|---|---|---|---|---|---|---|---|---|---|---|
| Konzentration ZnPy/ DCOIT (80:20) (ppm) | 3 | 2 | 1 | 0,75 | 0,5 | 0,4 | 0,3 | 0,2 | 0,1 | 0,05 | 0 |
| 5 | - | - | - | - | - | - | - | - | - | - | - |
| 3,0 | - | - | - | - | - | - | - | - | - | - | - |
| 2 | - | - | - | - | - | - | - | - | - | - | - |
| 1 | - | - | - | - | - | - | - | - | - | - | - |
| 0,75 | - | - | - | - | - | - | - | - | - | - | - |
| 0,5 | - | - | - | - | - | - | - | - | - | - | - |
| 0,4 | - | - | - | - | - | - | - | - | - | - | + |
| 0,3 | - | - | - | - | - | - | - | - | - | - | + |
| 0,2 | - | - | - | - | - | - | - | - | + | + | + |
| 0,1 | - | - | - | - | + | + | + | + | + | + | + |
| 0,05 | - | - | - | + | + | + | + | + | + | + | + |
| 0 | - | - | + | + | + | + | + | + | + | + | + |

Bei gleichzeitigem Einsatz von einerseits ZnPy/DCOIT (Gewichtsverhältnis 80:20) und andererseits IPBC trat ein Synergismus ein. Die Berechnung des Synergieindex ergibt sich aus der Tabelle IV. Hiernach lag bei Penicillium funiculosum DSM 12637 der niedrigste Synergieindex (0,50) bei einem Gemisch aus 50,0 Gew.% ZnPy/DCOIT (80:20) und 50,0 Gew.% IPBC.

Tabelle IV Berechnung des Synergieindex von ZnPy/DCOIT (80:20) + IPBC bezüglich Penicillium funiculosum DSM 12637 bei einer Inkubationszeit von 96 h/25 °C

| MHK bei | | | Konzentration | | $Q_a/Q_A$ | $Q_b/Q_B$ | Synergie-index |
|---|---|---|---|---|---|---|---|
| ZnPy/ DCOIT-Konzentration (80:20) $Q_a$ (ppm) | IPBC-Konzentration $Q_b$ ppm) | Gesamt-konzentration ZnPy/DCOIT + IPBC $Q_a + Q_b$ (ppm) | ZnPy/ DCOIT (80:20) (Gew-%) | IPBC (Gew.%) | | | $Q_a/Q_A + Q_b/Q_B$ |
| 0 | 2 | 2 | 0,0 | 100,0 | 0,00 | 1,00 | 1,00 |
| 0,05 | 1 | 1,05 | 4,8 | 95,2 | 0,10 | 0,50 | 0,60 |
| 0,1 | 0,75 | 0,85 | 11,8 | 88,2 | 0,20 | 0,20 | 0,58 |
| 0,2 | 0,4 | 0,6 | 33,3 | 66,7 | 0,40 | 0,15 | 0,60 |
| 0,2 | 0,3 | 0,5 | 40,0 | 60,0 | 0,40 | 0,10 | 0,55 |
| 0,2 | 0,2 | 0,4 | 50,0 | 50,0 | 0,40 | 0,05 | 0,50 |
| 0,3 | 0,1 | 0,4 | 75,0 | 25,0 | 0,60 | 0,03 | 0,65 |
| 0,3 | 0,05. | 0,35 | 85,7 | 14,3 | 0,60 | 0,03 | 0,63 |
| 0,4 | 0,05 | 0,45 | 88,9 | 11,1 | 0,80 | 0,00 | 0,83 |
| 0,5 | 0 | 0,5 | 100,0 | 0,0 | 1,00 | 0,00 | 1,00 |

Beispiele 3 bis 8

Zur Prüfung der fungiziden und algiziden Filmkonservierung von Beschichtungsmaterialien wurden Proben dieser Materialien mit unterschiedlichen Konzentrationen an Bioziden ausgerüstet und auf geeignete Trägermaterialien, z. B. auf Calciumsilicatplatten mit einer Größe von etwa 5 cm x 5 cm, mit einem Pinsel oder einem Spatel aufgebracht. Nach dem Trocknen der Beschichtungen bei 20 ± 1 °C erfolgte eine Bewässerung während einer bestimmten Zeit.

Im Fall der Prüfung der fungiziden Konservierung wurden die nicht gewässerten und die entsprechend gewässerten Prüfkörper in ein Agar-Nährmedium eingebettet, wobei die Probenoberfläche nicht vom Nährmedium bedeckt war. Anschließend wurden die eingebetteten Prüfkörper mit einer Suspension aus Sporen von praxisrelevanten Pilzen besprüht und bei für Pilze optimalen Wachstumsbedingungen gelagert.

Im Fall der Prüfung der algiziden Konservierung wurden die nicht gewässerten und die entsprechend gewässerten Prüfkörper in eine spezielle Algen-Nährlösung eingelegt, die ausgewählte praxisrelevante Algen-Spezies enthielt, und dann bei für Algen optimalen Wachstumsbedingungen gelagert. Nach der jeweiligen Lagerung wurde das Ausmaß des Pilz- bzw. Algenwachstums auf den Prüfkörperoberflächen bewertet.

Für die Prüfungen der fungiziden Konservierung wurde ein repräsentatives Sporengemisch aus gleichen Teilen der folgenden Spezies benutzt:

Alternaria alternata
Aspergillus niger
Cladosporium cladosporoides
Penicillium funiculosum
Ulocladium atrum

Bewertungsmaßstab:

o = kein Wachstum sichtbar
x = minimales Wachstum (bis 25 % der Fläche bewachsen)
xx = leichtes Wachstum (bis 50 % der Fläche bewachsen)
xxx = mittelstarkes Wachstum (bis 75 % der Fläche bewachsen)
xxxx= starkes Wachstum (bis 100 % der Fläche, bewachsen)

In den Beispielen 3 bis 5 wurde die fungizide und algizide Konservierung einer matten Fassadenfarbe mit der in der nachfolgenden Tabelle V angegebenen Zusammensetzung geprüft.

Tabelle V Fassadenfarbe

| Bestandteil | Menge, Gew.-teile |
|---|---|
| Wasser | 65 |
| Pigmentverteiler A (BASF AG) | 3 |
| Natriumpolyphosphat, 25%ige Lösung | 4 |
| Ammoniak, konzentriert | 2 |
| Konservierungsmittel ACTICIDE® FI (Thor GmbH) | 3 |
| Methylcellulose, 20 000 mPas, 2%ige Lösung | 100 |
| Testbenzin (180-210 °C) | 13 |
| Lusolvan® FBH (BASF AG) | 7 |
| Lumiten® N-OC 30 (BASF AG) | 10 |
| Titandioxid Rutil, Kronos® 2043 (Kronos-Titan GmbH) | 180 |
| Omyacarb® 5 GU (Omya GmbH) | 240 |
| Talkum, 5 μm | 50 |
| Entschäumer Agitan® 280 (Münzing Chemie GmbH) | 3 |
| Polyacrylat Acronal® 290D (BASF AG) | 320 |
| | 1000 |

In den Beispielen 6 bis 8 wurde die fungizide und algizide Konservierung eines Reibeputzes mit der in der nachfolgenden Tabelle VI angegebenen Zusammensetzung geprüft.

Tabelle VI Reibeputz

| Bestandteil | Menge, Gew.-teile |
|---|---|
| Natriumpolyphosphat, 25%ige Lösung | 8 |
| Konservierungsmittel ACTICIDE® FI (Thor GmbH) | 3 |
| Entschäumer Agitan® 280 (Münzing Chemie GmbH) | 3 |
| Polyacrylat Latekoll® D, 8%ige ammoniakalische Lösung (BASF AG) | 8 |
| Testbenzin (180-210 °C) | 10 |
| Butyldiglykol | 10 |
| Basophob® WDS (BASF AG) | 6 |
| Titandioxid Rutil, Kronos® 2044 (Kronos-Titan GmbH) | 28 |
| Omyacarb® 40 GU (Omya GmbH) | 395 |
| Omyacarb® 130 GU (Omya GmbH) | 255 |
| Plastorit (Luzenac Deutschland GmbH) | 65 |
| Quarz Rundkies | 45 |
| Wasser | 32 |
| Acronal 290 D | 132 |
| | 1000 |

Beispiel 3

Es wurde ein Film der vorgenannten Fassadenfarbe bezüglich seiner Konservierung untersucht.

Als Biozidzusammensetzung wurde die nachfolgende wäßrige Biozidzusammensetzung I eingesetzt. Die angegebenen Prozentsätze beziehen sich auf das gesamte wäßrige Gemisch aus Fassadenfarbe, und Wirkstoffen.

Biozidzusammensetzung I:

| | |
|---|---|
| ZnPy | 3 % |
| IPBC | 2 % |
| OIT | 3 % |

In der nachfolgenden Tabelle VII sind die in den Versuchen verwendeten Wirkstoffanteile , der Zeitraum der Wässerung der mit den Bioziden konservierten Filme sowie das Pilz- und Algenwachstum auf der Oberfläche der Filme am Ende des Versuchs angegeben.

Tabelle VII Konservierung von Filmen der vorgenannten Fassadenfarbe gegen Pilz- und Algenwachstum mittels der Biozidzusammensetzung I

| Nr. | Wirksstoffanteile ZnPy/IPBC/OIT (ppm) | Wässerung (d) | Pilzwachstum an der Film-oberfläche | Algenwachstum an der Film-oberfläche |
|---|---|---|---|---|
| 1 | 30/20/30 | 0 | x | xxx |
| 2 | 30/20/30 | 2 | xx | xxxx |
| 3 | 60/40/60 | 0 | x | xx |
| 4 | 60/40/60 | 2 | xxx | xxxx |
| 5 | 90/60/90 | 0 | x | 0 |
| 6 | 90/60/90 | 2 | x | xxx |
| 7 | 150/100/150 | 0 | 0 | 0 |
| 8 | 150/100/150 | 2 | 0 | xxx |
| 9 | 225/150/225 | 0 | 0 | 0 |
| 10 | 225/150/225 | 2 | 0 | xx |

Tabelle fortgesetzt

| Nr. | Wirksstoffanteile ZnPy/IPBC/OIT (ppm) | Wässerung (d) | Pilzwachstum an der Film-oberfläche | Algenwachstum an der Film-oberfläche |
|---|---|---|---|---|
| 11 | 300/200/300 | 0 | 0 | 0 |
| 12 | 300/200/300 | 2 | 0 | 0 |
| 13 | 0/0/0 (Vergleich) | 0 | xxx | xxxx |
| 14 | 0/0/0 (Vergleich) | 2 | xxx | xxxx |

Beispiele 4

Beispiel 3 wurde, wiederholt, jedoch unter Binsatz der nachfolgenden wäßrigen Biozidzusammensetzung II. Die angegebenen Prozentsätze beziehen sich auf das gesamte wäßrige Gemisch aus Fassadenfarbe und Wirkstoffen.

Biozidzusammensetzung II:

| | |
|---|---|
| ZnPy | 3 % |
| IPBC | 2 % |
| DCOIT | 3 % |

In der nachfolgenden Tabelle VIII sind die in den Versuchen verwendeten Wirkstoffanteile, der Zeitraum der Wässerung der mit den Bioziden konservierten Filme sowie das Pilz- und Algenwachstum auf der Oberfläche der Filme am Ende des Versuchs angegeben.

Tabelle VIII Konservierung von Filmen der vorgenannten Fässadenfarbe gegen Pilz- und Algenwachstum mittels der Biozidzusammensetzung II

| Nr. | Wirksstoffanteile ZnPy/IPBC/DCOIT (ppm) | Wässerung (d) | Pilzwachstum an der Film-oberfläche | Algenwachstum an der Film-oberfläche |
|---|---|---|---|---|
| 1 | 30/20/30 | 0 | x | xxxx |
| 2 | 30/20/30 | 2 | xxx | xxxx |
| 3 | 60/40/60 | 0 | x | xx |
| 4 | 60/40/60 | 2 | xx | xxxx |
| 5 | 90/60/90 | 0 | 0 | xx |
| 6 | 90/60/90 | 2 | 0 | xxxx |
| 7 | 150/100/150 | 0 | 0 | x |
| 8 | 150/100/150 | 2 | 0 | xxxx |
| 9 | 225/150/225 | 0 | 0 | 0 |
| 10 | 225/150/225 | 2 | 0 | xx |
| 11 | 300/200/30.0 | 0 | 0 | 0 |
| 12 | 300/200/300 | 2 | 0 | 0 |
| 13 | 0/0/0 (Vergleich) | 0 | xxx | xxxx |
| 14 | 0/0/0 (Vergleich) | 2 | xxx | xxxx |

Beispiel 5

Beispiel 3 wurde wiederholt, jedoch unter Binsatz der nachfolgenden wäßrigen Biozidzusammensetzung III. Die angegebenen Prozentsätze beziehen sich auf das gesamte wäßrige Gemisch aus Fassadenfarbe und Wirkstoffen.

Biozidzusammensetzung III:

| | |
|---|---|
| ZnPy | 3 % |
| IPBC | 2 % |
| OIT | 1,5 % |
| DCOIT | 1,5 % |

In der nachfolgenden Tabelle IX sind die in den Versuchen verwendeten Wirkstoffanteile, der Zeitraum der Wässerung der mit den Bioziden konservierten Filme und das Pilz- und Algenwachstum auf der Oberfläche der Filme am Ende der Versuche angegeben.

Tabelle IX Konservierung von Filmen der vorgenannten Fassadenfarbe gegen Pilz- und Algenwachstum mittels der Biozidzusammensetzung III

| Nr. | Wirksstoffanteile ZnPy/IPBC/OIT/ DCOIT (ppm) | Wässerung (d) | Pilzwachstum an der Film-oberfläche | Algenwachstum an der Film-oberfläche |
|---|---|---|---|---|
| 1 | 30/20/15/15 | 0 | x | xx |
| 2 | 30/20/15/15 | 2 | xx | xxxx |
| 3 | 60/40/30/30 | 0 | x | xx |
| 4 | 60/40/30/30 | 2 | xx | xxxx |
| 5 | 90/60/45/45 | 0 | 0 | 0 |
| 6 | 90/60/45/45 | 2 | 0 | xx |
| 7 | 150/100/75/75 | 0 | 0 | 0 |
| 8 | 150/100/75/75 | 2 | 0 | x |
| 9 | 225/150/112,5/112,5 | 0 | 0 | 0 |
| 10 | 225/150/112,5/112,5 | 2 | 0 | 0 |
| 11 | 300/200/150/150 | 0 | 0 | 0 |
| 12 | 300/200/150/150 | 2 | 0 | 0 |
| 13 | 0/0/0/0 (Vergleich) | 0 | xxx | xxxx |
| 14 | 0/0/0/0 (Vergleich) | 2 | xxx | xxxx |

Beispiel 6

Beispiel 3 wurde wiederholt, jedoch wurde anstelle, der Fassadenfarbe jetzt der vorgenannte Reibeputz eingesetzt.

In der nachfolgenden Tabelle X sind die Ergebnisse zusammengefaßt.

Tabelle X Konservierung von Filmen des vorgenannten Reibeputzes gegen Pilz- und Algenwachstum mittels der Biozidzusammensetzung I

| Nr. | Wirksstoffanteile ZnPy/IPBC/OIT (ppm) | Wässerung (d) | Pilzwachstum an der Film-oberfläche | Algenwachstum an der Film-oberfläche |
|---|---|---|---|---|
| 1 | 30/20/30 | 0 | 0 | 0 |
| 2 | 30/20/30 | 2 | 0 | xxxx |
| 3 | 60/40/60 | 0 | 0 | 0 |
| 4 | 60/40/60 | 2 | 0 | 0 |
| 5 | 90/60/90 | 0 | 0 | 0 |
| 6 | 90/60/90 | 2 | 0 | 0 |
| 7 | 150/100/150 | 0 | 0 | 0 |
| 8 | 150/100/150 | 2 | 0 | 0 |

Tabelle fortgesetzt

| Nr. | Wirksstoffanteile ZnPy/IPBC/OIT (ppm) | Wässerung (d) | Pilzwachstum an der Film-oberfläche | Algenwachstum an der Film-oberfläche |
|---|---|---|---|---|
| 9 | 225/150/225 | 0 | 0 | 0 |
| 10 | 225/150/225 | 2 | 0 | 0 |
| 11 | 0/0/0 (Vergleich) | 0 | xxx | xxxx |
| 12 | 0/0/0 (Vergleich) | 2 | xxx | xxxx |

Beispiel 7

Beispiel 6 wurde wiederholt, jedoch unter Einsatz der wäßrigen Biozidzusammensetzung II.

In der nachfolgenden Tabelle XI sind die Ergebnisse zusammengefaßt.

Tabelle XI Konservierung von Filmen des vorgenannten Reibeputzes gegen Pilz- und Algenwachstum mittels der Biozidzusammensetzung II

| Nr. | Wirksstoffanteile ZnPy/IPBC/DCOIT (ppm) | Wässerung (d) | Pilzwachstum an der Film-oberfläche | Algenwachstum an der Film-oberfläche |
|---|---|---|---|---|
| 1 | 30/20/30 | 0 | x | 0 |
| 2 | 30/20/30 | 2 | x | xxx |
| 3 | 60/40/60 | 0 | x | 0 |
| 4 | 60/40/60 | 2 | x | x |
| 5 | 90/60/90 | 0 | 0 | 0 |
| 6 | 90/60/90 | 2 | 0 | 0 |
| 7 | 150/100/150 | 0 | 0 | 0 |
| 8 | 150/100/150 | 2 | 0 | 0 |
| 9 | 225/150/225 | 0 | 0 | 0 |
| 10 | 225/150/225 | 2 | 0 | 0 |
| 11 | 0/0/0 (Vergleich) | 0 | xxx | xxxx |
| 12 | 0/0/0 (Vergleich) | 2 | xxx | xxxx |

Beispiel 8

Beispiel 6 wurde wiederholt, jedoch unter Einsatz der wäßrigen Biozidzusammensetzung III.

In der nachfolgenden Tabelle XII sind die Ergebnisse zusammengefaßt.

Tabelle XII Konservierung von Filmen des vorgenannten Reibeputzes gegen Pilz- und Algenwachstum mittels der Biozidzusammensetzung III

| Nr. | Wirksstoffanteile ZnPy/IPBC/OIT/ DCOIT (ppm) | Wässerung (d) | Pilzwachstum an der Film-oberfläche | Algenwachstum an der Film-oberfläche |
|---|---|---|---|---|
| 1 | 30/20/15/15 | 0 | xxx | xxxx |
| 2 | 30/20/15/15 | 2 | xx | xxxx |
| 3 | 60/40/30/30 | 0 | 0 | 0 |
| 4 | 60/40/30/30 | 2 | 0 | 0 |
| 5 | 90/60/45/45 | 0 | 0 | 0 |
| 6 | 90/60/45/45 | 2 | 0 | 0 |
| 7 | 150/100/75/75 | 0 | 0 | 0 |
| 8 | 150/100/75/75 | 2 | 0 | 0 |
| 9 | 225/150/112,5/112,5 | 0 | 0 | 0 |

Tabelle fortgesetzt

| Nr. | Wirksstoffanteile ZnPy/IPBC/OIT/ DCOIT (ppm) | Wässerung (d) | Pilzwachstum an der Film-oberfläche | Algenwachstum an der Film-oberfläche |
|---|---|---|---|---|
| 10 | 225/150/112,5/112,5 | 2 | 0 | 0 |
| 11 | 0/0/0/0 (Vergleich) | 0 | xxx | xxxx |
| 12 | 0/0/0/0 (Vergleich) | 2 | xxx | xxxx |

**Patentansprüche**

1. Biozidzusammensetzung als Zusatz zu Stoffen, die von schädlichen Mikroorganismen befallen werden können, enthaltend ein Pyrithion und ein 2-Alkylisothiazolin-3-on als biozide Wirkstoffe, **dadurch gekennzeichnet, daß** die Biozidzusammensetzung als einen weiteren bioziden Wirkstoff ein Iodalkylcarbamat enthält.

2. Biozidzusammensetzung nach Anspruch 1, **dadurch gekennzeichnet, daß** sie als Pyrithion das Zink-, Natrium-, Kupfer- und/oder Eisenpyrithion enthält.

3. Biozidzusammensetzung nach Anspruch 1 oder 2, **dadurch gekennzeichnet, daß** sie das Pyrithion in einer Konzentration von 0,5 bis 99,5 Gew.%, bezogen auf die gesamte Biozidzusammensetzung, enthält.

4. Biozidzusammensetzung nach einem der Ansprüche 1 bis 3, **dadurch gekennzeichnet, daß** sie das 2-Alkylisothiazolin-3-on in einer Konzentration von 0,1 bis 99,9 Gew.%, bezogen auf die gesamte Biozidzusammensetzung, enthält.

5. Biozidzusammensetzung nach einem der Ansprüche 1 bis 4, **dadurch gekennzeichnet, daß** sie als 2-Alkylisothiazolin-3-on das 2-n-Octylisothiazolin-3-on oder das 4,5-Dichlor-2-n-octylisothiazolin-3-on oder ein Gemisch aus diesen beiden Verbindungen enthält.

6. Biozidzusammensetzung nach einem der Ansprüche 1 bis 5, **dadurch gekennzeichnet, daß** sie das Pyrithion und das 2-Alkylisothiazolin-3-on in einem Gewichtsverhältnis von 1:1000 bis 1000:1 enthält.

7. Biozidzusammensetzung nach Anspruch 6, **dadurch gekennzeichnet, daß** sie das Pyrithion und das 2-n-Octylisothiazolin-3-on und/oder 4,5-Dichlor-2-n-octylisothiazolin-3-on in einem Gewichtsverhältnis von 1:10 bis 10:1 enthält.

8. Biozidzusammensetzung nach einem der Ansprüche 1 bis 7, **dadurch gekennzeichnet, daß** sie das Pyrithion und das 2-Alkylisothiazolin-3-on in einer Gesamtkonzentration von 0,2 bis 100 Gew.%, bezogen auf die gesamte Biozidzusammensetzung, enthält.

9. Biozidzusammensetzung nach einem der Ansprüche 1 bis 8, **dadurch gekennzeichnet, daß** sie als Iodalkylcarbamat das 3-Iod-2-propinyl-N-butylcarbamat enthält.

10. Verwendung einer Biozidzusammensetzung nach einem der Ansprüche 1 bis 9 zur Bekämpfung von schädlichen Mikroorganismen in mikrobiell anfälligen Systemen.

11. Verwendung nach Anspruch 10, **dadurch gekennzeichnet, daß** die Biozidzusammensetzung zum Konservieren von Beschichtungen, Leder, Kunststoffen oder Holz eingesetzt wird.

12. Gegen schädliche Mikroorganismen konserviertes Stoffgemisch oder Material, **gekennzeichnet durch** einen Gehalt an einer Biozidzusammensetzung nach einem der Ansprüche 1 bis 9.

**Claims**

1. A biocide composition containing a pyrithione and a 2-alkylisothiazolin-3-one as biocidal active ingredients, as an additive to substances which can be attacked by harmful microorganisms, **characterised in that** the biocide composition contains an iodoalkyl carbamate as a further biocidal active ingredient.

2. A biocide composition according to claim 1 ; **characterised in that** it contains zinc pyrithione, sodium pyrithione, copper pyrithione and/or iron pyrithione as the pyrithione.

3. A biocide composition according to claim 1 or claim 2, **characterised in that** it contains the pyrithione in a concentration of from 0.5 to 99.5 wt.% relative to the entire biocide composition.

4. A biocide composition according to any one of claims 1 to 3, **characterised in that** it contains the 2-alkylisothiazolin-3-one in a concentration of from 0.1 to 99.9 wt.% relative to the entire biocide composition.

5. A biocide composition according to any one of claims 1 to 4, **characterised in that** it contains 2-n-octylisothiazolin-3-one or 4,5-dichloro-2-n-octylisothiazolin-3-one or a mixture of these two compounds as the 2-alkylisothiazolin-3-one.

6. A biocide composition according to any one of claims 1 to 5, **characterised in that** it contains the pyrithione and the 2-alkylisothiazolin-3-one in a weight ratio of from 1:1000 to 1000:1.

7. A biocide composition according to claim 6, **characterised in that** it contains the pyrithione and the 2-n-octylisothiazolin-3-one and/or 4,5-dichloro-2-n-octylisothiazolin-3-one in a weight ratio of from 1:10 to 10:1.

8. A biocide composition according to any one of claims 1 to 7, **characterised in that** it contains the pyrithione and the 2-alkylisothiazolin-3-one in a total concentration of from 0.2 to 100 wt.%, relative to the entire biocide composition.

9. A biocide composition according to any one of claims 1 to 8, **characterised in that** it contains 3-iodo-2-propynyl-N-butyl carbamate as the iodoalkyl carbamate.

10. Use of a biocide composition according to any one of claims 1 to 9 for combatting harmful microorganisms in systems which are susceptible to microbial attack.

11. Use according to claim 10, **characterised in that** the biocide composition is used for preserving coatings, leather, plastics or timber.

12. A substance mixture or material preserved against harmful microorganisms, **characterised by** a content of a biocide composition according to any one of claims 1 to 9.

## Revendications

1. Composition d'un biocide comme additif pour des substances qui peuvent être infestées par des microorganismes nocifs, contenant un pyrithion et une 2-alkylisothiazolin 3-one comme agents biocides, **caractérisée en ce que** la composition du biocide contient un iodalkylcarbamate.

2. Composition d'un biocide selon la revendication 1, **caractérisée en ce qu'**elle contient pour pyrithion le pyrithion zinc, sodium, cuivre et/ou fer.

3. Composition d'un biocide selon la revendication 1 ou 2, **caractérisée en ce qu'**elle contient le pyrithion à une concentration de 0,5 à 99,5% en poids rapportée à la composition totale du biocide.

4. Composition d'un biocide selon une des revendications 1 à 3, **caractérisée en ce qu'**elle contient la 2-alkylisothiazolin 3-one à une concentration de 0,1 à 99,9% en poids rapportée à la composition totale du biocide.

5. Composition d'un biocide selon une des revendications 1 à 4, **caractérisée en ce qu'**elle contient comme 2-alkylisothiazolin 3-one la 2-n-octylisothiazolin 3-one ou la 4,5-dichloro 2-n-octylisothiazolin 3-one ou un mélange de ces deux composés.

6. Composition d'un biocide selon une des revendications 1 à 5, **caractérisée en ce qu'**elle contient le pyrithion et la 2-alkylisothiazolin 3-one dans un rapport entre 1:1000 et 1000:1 en poids.

7. Composition d'un biocide selon la revendication 6, **caractérisée en ce qu'**elle contient le pyrithion et la 2-n-octylisothiazolin 3-one et/ou la 4,5-dichloro 2-n-octylisothiazolin 3-one dans un rapport entre 1:10 et 10:1 en poids.

8. Composition d'un biocide selon une des revendications 1 à 7, **caractérisée en ce qu'**elle contient le pyrithion et la 2-alkylisothiazolin 3-one à une concentration totale de 0,2 à 100% en poids rapportée à la composition totale du biocide.

9. Composition d'un biocide selon une des revendications 1 à 8, **caractérisée en ce qu'**elle contient comme iodalkylcarbamate le 3-iodo 2-propinyl N-butylcarbamate.

10. Utilisation d'une composition de biocide selon une des revendications 1 à 9 pour lutter contre les microorganismes nocifs dans les systèmes infectés par des microbes.

11. Utilisation selon la revendication 10, **caractérisée en ce** le mélange biocide est utilisé pour la conservation de revêtements, de cuirs, de matières plastiques ou de bois.

12. Mélange de produits ou matériau protégé contre les microorganismes nocifs, **caractérisé en ce qu'**il contient une des compositions de biocide selon une des revendications 1 à 9.